# EUROPÄISCHE PATENTSCHRIFT

(11) **EP 3 466 580 B1**
(45) Veröffentlichungstag und Bekanntmachung des Hinweises auf die Patenterteilung: **05.08.2020**
(21) Anmeldenummer: 18192356.6
(22) Anmeldetag: 04.09.2018
(51) Int. Cl.: B23K 9/028, B23K 37/053, B23K 26/282, B23K 37/02, B25J 13/08

(54) **ORBITALSCHWEISSVORRICHTUNG MIT VERBESSERTER SICHERHEIT UND VERRINGERTER AUSFALLWAHRSCHEINLICHKEIT**
ORBITAL WELDING DEVICE WITH IMPROVED SAFETY AND REDUCED FAILURE PROBABILITY
DISPOSITIF DE SOUDAGE ORBITAL À SÉCURITÉ AMÉLIORÉE ET À PROBABILITÉ DE DÉFAUT RÉDUITE

(30) Priorität: 22.09.2017 DE 102017122069
(43) Veröffentlichungstag der Anmeldung: 10.04.2019
(73) Patentinhaber: Illinois Tool Works, Inc., Glenview, Illinois 60025 (US)
(72) Erfinder: TAMM, Markus, Glenview, Illinois, 60025 (US); FOH, Marcel, Glenview, Illinois, 60025 (US)
(74) Vertreter: HGF

(56) Entgegenhaltungen:
- KR-A- 20130 102 796
- US-B1- 6 380 505

## Beschreibung

Die Erfindung betrifft eine Orbitalschweißvorrichtung nach dem Oberbegriff des Anspruchs 1 und ein Verfahren zum Betreiben einer Orbitalschweißvorrichtung nach dem Oberbegriff des Anspruchs 7 (siehe zum Beispiel KR 2013 0102796 A). Eine solche ist z.B. auch in der DE 20 2014 100 284 U1 gezeigt.

In der US 6,380,505 B1 ist eine Schweißvorrichtung beschrieben, und es wird beiläufig erwähnt, dass anstelle einer Verlängerungsachse eine einstellbare Rutschkupplung verwendet werden könne, um Benutzersicherheit zu erhöhen und Schaden zu verhindern.

Die Erfinder befanden es als dennoch verbesserungswürdig, die Sicherheit zu erhöhen und die Ausfallwahrscheinlichkeit zu reduzieren. Aufgabe der vorliegenden Erfindung ist es, diese Verbesserung durchzuführen. Die Aufgabe wird durch die unabhängigen Ansprüche gelöst. Vorteilhafte Weiterbildungen sind in den Unteransprüchen definiert.

Insbesondere wird die Aufgabe gelöst durch eine Orbitalschweißvorrichtung mit einem Schweißkopf, wobei der Schweißkopf eine Rohrhalterung und einen gegenüber der Rohrhalterung drehbar gelagerten Schweißelektrodenhalter aufweist, wobei die Orbitalschweißvorrichtung einen durch einen Motorcontroller der Orbitalschweißvorrichtung angesteuerten elektrischen Motor aufweist, welcher eingerichtet ist, den Schweißelektrodenhalter anzutreiben und ihn so gegenüber der Rohrhalterung zu verdrehen, wobei die Orbitalschweißvorrichtung eine elektrische Drehmomentmesseinrichtung aufweist, welche eingerichtet ist, ein von dem Motor auf den Schweißelektrodenhalter aufgebrachtes Drehmoment zu messen, bevorzugt immer dann, wenn der Motor aktiviert, d.h. mit Antriebsstrom gespeist wird, wobei die Drehmomentmesseinrichtung mit dem Motorcontroller verbunden ist, und wobei der Motorcontroller eingerichtet ist, den Motor automatisch anzuhalten, wenn das Drehmoment ein vorbestimmtes erstes Drehmoment überschreitet.

Die Aufgabe wird weiterhin insbesondere gelöst durch Verfahren zum Betreiben einer Orbitalschweißvorrichtung, beinhaltend die Schritte:
- Verdrehen eines Schweißelektrodenhalters der Orbitalschweißvorrichtung gegenüber einer Rohrhalterung der Orbitalschweißvorrichtung durch Ansteuern eines elektrischen Motors durch einen Motorcontroller der Orbitalschweißvorrichtung,
- Messen eines von dem Motor auf den Schweißelektrodenhalter aufgebrachten Drehmoments mittels einer elektrischen Drehmomentmesseinrichtung, bevorzugt immer dann, wenn der Motor aktiviert, d.h. mit Antriebsstrom gespeist wird,
- Automatisches Anhalten des Motors durch den Motorcontroller, wenn das Drehmoment ein vorbestimmtes erstes Drehmoment überschreitet.

Hierdurch wird die Sicherheit weiter erhöht und die Wahrscheinlichkeit eines Defekts der Vorrichtung aufgrund eines Blockierens des Antriebsmechanismus durch Fremdkörper reduziert. Im Gegensatz zur Ausführung mit einer Rutschkupplung wird erfindungsgemäß der Motor angehalten. Die Rutschkupplung begrenzt das Moment höchstens und dabei bringt der Motor dann immer noch das begrenzte Moment auf den Antriebsmechanismus auf.

Das erste vorbestimmte Drehmoment ist bevorzugt in der Orbitalschweißvorrichtung gespeichert. Es ist größer als das Drehmoment, welches für eine ordnungsgemäße Funktion des Orbitalschweißkopfes benötigt wird und steht für eine Blockierung des Schweißelektrodenhalters oder eines Antriebsmechanismus zwischen Motor und Schweißelektrodenhalter.

Unter einem Motorcontroller werden bevorzugt eine oder mehrere elektrische Einrichtungen verstanden, welche eingerichtet ist oder sind direkt oder indirekt einen Betriebszustand (z.B. Drehzahl, Drehmoment) des Motors zu beeinflussen.

In einem weiteren Ausführungsbeispiel der vorliegenden Erfindung weist die Drehmomentmesseinrichtung eine Strommesseinrichtung auf, welche eingerichtet ist, einen elektrischen Motorstrom zum Antreiben des Motors als einen das Drehmoment repräsentierenden Wert zu messen. In einem weiteren erfindungsgemäßen Verfahren misst die elektrische Drehmomentmesseinrichtung mittels einer Strommesseinrichtung den elektrischen Motorstrom zum Antreiben des Motors als einen das Drehmoment repräsentierenden Wert.

Hierdurch wird mittels eines Stromsensors eine einfache Messung eines dem Drehmoment in etwa proportionalen Signals ermöglicht. Die Strommesseinrichtung ist bevorzugt ein Widerstand in der Stromzufuhrleitung des Motors, bevorzugt niederohmig.

In einem weiteren Ausführungsbeispiel der vorliegenden Erfindung ist der Motorcontroller eingerichtet, den Motor in entgegengesetzter Richtung automatisch für eine bestimmte Zeit oder für eine bestimmte Anzahl von Umdrehungen zu starten, direkt nachdem der Motor aufgrund eines Überschreitens des ersten vorbestimmten Drehmoments angehalten wurde. In einem weiteren erfindungsgemäßen Verfahren wird der Motor automatisch durch den Motorcontroller in entgegengesetzter Richtung automatisch für eine bestimmte Zeit oder für eine bestimmte Anzahl von Umdrehungen gestartet, direkt nachdem der Motor aufgrund eines Überschreitens des ersten vorbestimmten Drehmoments angehalten wurde.

Hierdurch wird die Sicherheit noch weiter erhöht. Sollte sich eine Person z.B. die Finger in den Antriebsmechanismus einquetschen, werden diese durch die Rückwärtsfahrt möglicherweise wieder befreit.

In einem weiteren Ausführungsbeispiel der vorliegenden Erfindung ist der Motorcontroller eingerichtet, den Motor automatisch wiederum anzuhalten wenn das Drehmoment wiederum das vorbestimmte Drehmoment überschreitet, nachdem der Motor in entgegengesetzter Richtung für eine bestimmte Zeit oder für eine bestimmte Anzahl von Umdrehungen gestartet wurde, direkt nachdem der Motor aufgrund eines Überschreitens des ersten vorbestimmten Drehmoments angehalten wurde. In einem weiteren erfindungsgemäßen Verfahren wird der Motor durch den Motorcontroller wiederum angehalten wenn das Drehmoment wiederum das vorbestimmte Drehmoment überschreitet, nachdem der Motor in entgegengesetzter Richtung für eine bestimmte Zeit oder für eine bestimmte Anzahl von Umdrehungen gestartet wurde, direkt nachdem der Motor aufgrund eines Überschreitens des ersten vorbestimmten Drehmoments angehalten wurde.

Hierdurch werden die Sicherheit und die Wahrscheinlichkeit eines Defekts der Vorrichtung aufgrund eines Blockierens des Antriebsmechanismus durch Fremdkörper noch weiter reduziert. Sollte bei der Rückwärtsfahrt eine erneute Blockierung (= Drehmoment überschreitet das erste vorbestimmte erste Drehmoment) auftreten, wird der Motor wiederum angehalten.

In einem weiteren Ausführungsbeispiel der vorliegenden Erfindung ist die Orbitalschweißvorrichtung eingerichtet, automatisch ein visuelles und/oder akustisches und/oder haptisches Signal auszugeben oder ein elektronisches Signal zur visuellen und/oder akustischen und/oder haptischen Darstellung auf einem anderen Gerät zu versenden oder auf einer Speichereinheit zu speichern, wenn das Drehmoment über einen vorbestimmten Zeitraum dauerhaft ein zweites vorbestimmtes Drehmoment überschreitet, wobei das zweite vorbestimmte Drehmoment kleiner ist als das erste vorbestimmte Drehmoment. In einem weiteren erfindungsgemäßen Verfahren gibt die Orbitalschweißvorrichtung automatisch ein visuelles und/oder akustisches und/oder haptisches Signal aus oder sie versendet oder speichert automatisch ein elektronisches Signal zur visuellen und/oder akustischen und/oder haptischen Darstellung auf einem anderen Gerät, wenn das Drehmoment über einen vorbestimmten Zeitraum dauerhaft ein zweites vorbestimmtes Drehmoment überschreitet, wobei das zweite vorbestimmte Drehmoment kleiner ist als das erste vorbestimmte Drehmoment.

Hierdurch wird eine Verschleißerfassung ermöglicht. Sollte der Drehmechanismus schleichend immer schwergängiger werden, z.B. durch Verschmutzung oder Austrocknen von Schmiermittel, kann dies hiermit festgestellt werden. Entweder erhält der Benutzer direkt ein visuelles und/oder akustisches und/oder haptisches Signal. Oder ein Signal wird z.B. zu einer Überwachungszentrale (z.B. Hauptsitz einer Baufirma) gesendet, um dort ein visuelles und/oder akustisches und/oder haptisches Signal auszugeben. Oder dieses Signal wird auf einer Speichereinheit, z.B. einem Speicherchip der Orbitalschweißvorrichtung, gespeichert, um dann z.B. von einem Service-Techniker ausgelesen zu werden, welcher dann die Information über den aufgetretenen Verschleißfall mittels des visuellen und/oder akustischen und/oder haptischen Signals dargestellt bekommt.

In einem weiteren Ausführungsbeispiel der vorliegenden Erfindung sind der Motorcontroller und die Drehmomentmesseinrichtung in einer Schweißstromquelle der Orbitalscheißvorrichtung angeordnet, während der Motor in dem Schweißkopf angeordnet ist. Hierdurch kann der Schweißkopf handliche Dimensionen beibehalten.

Die Erfindung soll nun anhand einer Zeichnung beispielhaft weiter veranschaulicht werden.

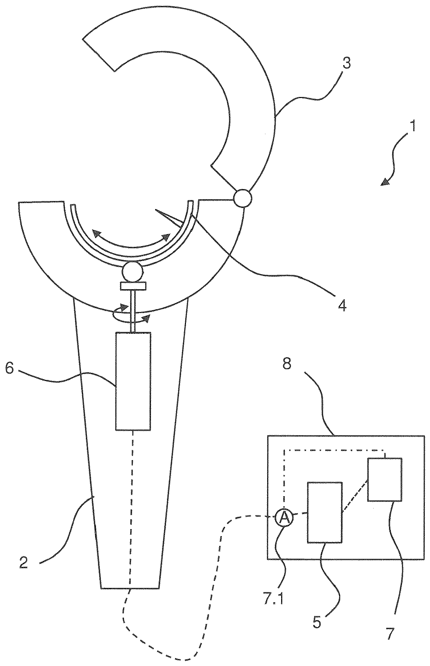

Figur 1 zeigt eine Orbitalschweißvorrichtung 1 mit einem Schweißkopf 2, wobei der Schweißkopf eine Rohrhalterung 3 und einen gegenüber der Rohrhalterung 3 drehbar gelagerten Schweißelektrodenhalter 4 aufweist. Die Orbitalschweißvorrichtung 1 weist einen durch einen Motorcontroller 5 der Orbitalschweißvorrichtung 1 angesteuerten elektrischen Motor 6 aufweist. Der Motor 6 ist eingerichtet, den Schweißelektrodenhalter 4 anzutreiben und ihn so gegenüber der Rohrhalterung 3 zu verdrehen. Die Orbitalschweißvorrichtung 1 weist eine elektrische Drehmomentmesseinrichtung 7 auf, welche eingerichtet ist, ein von dem Motor 6 auf den Schweißelektrodenhalter 4 aufgebrachtes Drehmoment zu messen. Die Drehmomentmesseinrichtung 7 ist mit dem Motorcontroller 5 verbunden. Der Motorcontroller 5 ist eingerichtet, den Motor 6 automatisch anzuhalten, wenn das Drehmoment ein vorbestimmtes erstes Drehmoment überschreitet

Die Drehmomentmesseinrichtung 7 weist eine Strommesseinrichtung 7.1 auf, welche eingerichtet ist, einen elektrischen Motorstrom zum Antreiben des Motors 6 als einen das Drehmoment repräsentierenden Wert zu messen.

Der Motorcontroller 5 und die Drehmomentmesseinrichtung 7 sind in einer Schweißstromquelle 8 angeordnet, während der Motor 6 in dem handlichen Schweißkopf 2 angeordnet ist.

### Bezugszeichenliste

- 1: Orbitalschweißvorrichtung
- 2: Schweißkopf
- 3: Rohrhalterung
- 4: Schweißelektrodenhalter
- 5: Motorcontroller
- 6: Motor
- 7: Drehmomentmesseinrichtung
- 7.1: Strommesseinrichtung
- 8: Schweißstromquelle

## Patentansprüche

1. Orbitalschweißvorrichtung (1) mit einem Schweißkopf (2),
wobei der Schweißkopf eine Rohrhalterung (3) und einen gegenüber der Rohrhalterung (3) drehbar gelagerten Schweißelektrodenhalter (4) aufweist, wobei die Orbitalschweißvorrichtung (1) einen durch einen Motorcontroller (5) der Orbitalschweißvorrichtung (1) angesteuerten elektrischen Motor (6) aufweist, welcher eingerichtet ist, den Schweißelektrodenhalter (4) anzutreiben und ihn so gegenüber der Rohrhalterung (3) zu verdrehen,
**dadurch gekennzeichnet, dass**
die Orbitalschweißvorrichtung (1) eine elektrische Drehmomentmesseinrichtung (7) aufweist, welche eingerichtet ist, ein von dem Motor (6) auf den Schweißelektrodenhalter (4) aufgebrachtes Drehmoment zu messen, wobei die Drehmomentmesseinrichtung (7) mit dem Motorcontroller (5) verbunden ist, und dass der Motorcontroller (5) eingerichtet ist, den Motor (6) automatisch anzuhalten, wenn das Drehmoment ein vorbestimmtes erstes Drehmoment überschreitet.

2. Orbitalschweißvorrichtung (1) gemäß Anspruch 1,
wobei die Drehmomentmesseinrichtung (7) eine Strommesseinrichtung (7.1) aufweist, welche eingerichtet ist, einen elektrischen Motorstrom zum Antreiben des Motors (6) als einen das Drehmoment repräsentierenden Wert zu messen.

3. Orbitalschweißvorrichtung (1) gemäß einem der vorhergehenden Ansprüche,
wobei der Motorcontroller (5) eingerichtet ist, den Motor (5) automatisch in entgegengesetzter Richtung für eine bestimmte Zeit oder für eine bestimmte Anzahl von Umdrehungen zu starten, direkt nachdem der Motor (6) aufgrund eines Überschreitens des ersten vorbestimmten Drehmoments angehalten wurde.

4. Orbitalschweißvorrichtung (1) gemäß Anspruch 3,
wobei der Motorcontroller (5) eingerichtet ist, den Motor (6) automatisch wiederum anzuhalten wenn das Drehmoment wiederum das vorbestimmte Drehmoment überschreitet, nachdem der Motor (6) in entgegengesetzter Richtung für eine bestimmte Zeit oder für eine bestimmte Anzahl von Umdrehungen gestartet wurde, direkt nachdem der Motor (6) aufgrund eines Überschreitens des ersten vorbestimmten Drehmoments angehalten wurde.

5. Orbitalschweißvorrichtung (1) gemäß einem der vorhergehenden Ansprüche,
wobei die Orbitalschweißvorrichtung (1) eingerichtet ist, automatisch ein visuelles und/oder akustisches und/oder haptisches Signal auszugeben oder ein elektronisches Signal zur visuellen und/oder akustischen und/oder haptischen Darstellung auf einem anderen Gerät zu versenden oder auf einer Speichereinheit zu speichern, wenn das Drehmoment über einen vorbestimmten Zeitraum dauerhaft ein zweites vorbestimmtes Drehmoment überschreitet, wobei das zweite vorbestimmte Drehmoment kleiner ist als das erste vorbestimmte Drehmoment.

6. Orbitalschweißvorrichtung (1) gemäß einem der vorhergehenden Ansprüche,
wobei der Motorcontroller (5) und die Drehmomentmesseinrichtung (7) in einer Schweißstromquelle (8) der Orbitalscheißvorrichtung (1) angeordnet sind, während der Motor (6) in dem Schweißkopf (2) angeordnet ist.

7. Verfahren zum Betreiben einer Orbitalschweißvorrichtung (1), beinhaltend die Schritte:
- Verdrehen eines Schweißelektrodenhalters (4) der Orbitalschweißvorrichtung (1) gegenüber einer Rohrhalterung (2) der Orbitalschweißvorrichtung (1) durch Ansteuern eines elektrischen Motors (6) durch einen Motorcontroller (5) der Orbitalschweißvorrichtung (1),
**dadurch gekennzeichnet, dass**
das Verfahren weiterhin beinhaltet:
- Messen eines von dem Motor (6) auf den Schweißelektrodenhalter (4) aufgebrachten Drehmoments mittels einer elektrischen Drehmomentmesseinrichtung (7)
- Automatisches Anhalten des Motors (6), wenn das Drehmoment ein vorbestimmtes erstes Drehmoment überschreitet.

## Claims

1. Orbital welding device (1) with a welding head (2), the welding head having a tubular mount (3) and a welding electrode holder (4) rotatably supported with respect to the tubular mount (3), the orbital welding device (1) having an electric motor (6) which is activated by a motor controller (5) of the orbital welding device (1) and is designed to drive the welding electrode holder (4) and thus to rotate it with respect to the tubular mount (3),
**characterized in that**
the orbital welding device (1) has an electrical torque measuring device (7), which is designed to measure a torque applied by the motor (6) to the welding electrode holder (4), wherein the torque measuring device (7) is connected to the motor controller (5), and **in that** the motor controller (5) is designed to stop the motor (6) automatically if the torque exceeds a predetermined first torque.

2. Orbital welding device (1) according to Claim 1,
wherein the torque measuring device (7) has a current measuring device (7.1), which is designed to measure an electrical motor current for driving the motor (6) as a value representing the torque.

3. Orbital welding device (1) according to one of the preceding claims,
wherein the motor controller (5) is designed to start the motor (5) automatically in the opposite direction for a specific time or for a specific number of revolutions, directly after the motor (6) has been stopped on account of exceeding the first predetermined torque.

4. Orbital welding device (1) according to Claim 3,
wherein the motor controller (5) is designed to stop the motor (6) automatically once again if the torque once again exceeds the predetermined torque after the motor (6) has been started in the opposite direction for a specific time or for a specific number of revolutions, directly after the motor (6) has been stopped on account of exceeding the first predetermined torque.

5. Orbital welding device (1) according to one of the preceding claims,
wherein the orbital welding device (1) is designed automatically to output a visual and/or acoustic and/or haptic signal or to transmit an electronic signal for visual and/or acoustic and/or haptic indication on another device or to store it on a storage unit if the torque persistently exceeds a second predetermined torque over a predetermined time period, wherein the second predetermined torque is lower than the first predetermined torque.

6. Orbital welding device (1) according to one of the preceding claims,
wherein the motor controller (5) and the torque measuring device (7) are arranged in a welding current source (8) of the orbital welding device (1), while the motor (6) is arranged in the welding head (2) .

7. Method for operating an orbital welding device (1), including the steps of:
- rotating a welding electrode holder (4) of the orbital welding device (1) with respect to a tubular mount (2) of the orbital welding device (1) by activating an electric motor (6) by a motor controller (5) of the orbital welding device (1), **characterized in that**
the method further includes:
- measuring a torque applied by the motor (6) to the welding electrode holder (4) by means of an electrical torque measuring device (7),
- automatically stopping the motor (6) if the torque exceeds a predetermined first torque.

## Revendications

1. Dispositif de soudage orbital (1) comprenant une tête de soudage (2),
la tête de soudage comprenant un support tubulaire (3) et un porte-électrode de soudage (4) monté rotatif par rapport au support tubulaire (3), le dispositif de soudage orbital (1) comprenant un moteur électrique (6) commandé par un dispositif de commande de moteur (5) du dispositif de soudage orbital (1), lequel moteur est conçu pour entraîner le porte-électrode de soudage (4) et pour l'entraîner ainsi en rotation par rapport au support tubulaire (3),
**caractérisé en ce que**
le dispositif de soudage orbital (1) comprend un dispositif de mesure de couple électrique (7), lequel est conçu pour mesurer un couple appliqué par le moteur (6) sur le porte-électrode de soudage (4), le dispositif de mesure de couple (7) étant connecté au dispositif de commande de moteur (5), et **en ce que** le dispositif de commande de moteur (5) est conçu pour arrêter automatiquement le moteur (6) lorsque le couple dépasse un premier couple prédéterminé.

2. Dispositif de soudage orbital (1) selon la revendication 1,
le dispositif de mesure de couple (7) comprenant un dispositif de mesure de courant (7.1), lequel est conçu pour mesurer un courant de moteur électrique pour l'entraînement du moteur (6) en tant que valeur représentant le couple.

3. Dispositif de soudage orbital (1) selon l'une des revendications précédentes,
le dispositif de commande de moteur (5) étant conçu pour démarrer automatiquement le moteur (5) en sens inverse pendant une durée déterminée ou pendant un nombre déterminé de révolutions, immédiatement après que le moteur (6) a été arrêté en raison d'un dépassement du premier couple prédéterminé.

4. Dispositif de soudage orbital (1) selon la revendication 3,
le dispositif de commande de moteur (5) étant conçu pour arrêter à nouveau automatiquement le moteur (6) lorsque le couple dépasse à nouveau le couple prédéterminé, après que le moteur (6) a été démarré en sens inverse pendant une durée déterminée ou pendant un nombre déterminé de révolutions, immédiatement après que le moteur (6) a été arrêté en raison d'un dépassement du premier couple prédéterminé.

5. Dispositif de soudage orbital (1) selon l'une des revendications précédentes,
le dispositif de soudage orbital (1) étant conçu pour émettre automatiquement un signal visuel et/ou acoustique et/ou haptique ou pour envoyer un signal électronique pour la représentation visuelle et/ou acoustique et/ou haptique sur un autre appareil ou pour le mémoriser sur une unité mémoire, lorsque le couple dépasse de manière durable un deuxième couple prédéterminé pendant une période prédéterminée, le deuxième couple prédéterminé étant inférieur au premier couple prédéterminé.

6. Dispositif de soudage orbital (1) selon l'une des revendications précédentes,
le dispositif de commande de moteur (5) et le dispositif de mesure de couple (7) étant disposés dans une source de courant de soudage (8) du dispositif de soudage orbital (1), tandis que le moteur (6) est disposé dans la tête de soudage (2).

7. Procédé permettant de faire fonctionner un dispositif de soudage orbital (1), comprenant les étapes :
- la rotation d'un porte-électrode de soudage (4) du dispositif de soudage orbital (1) par rapport à un support tubulaire (2) du dispositif de soudage orbital (1) par commande d'un moteur électrique (6) au moyen d'un dispositif de commande de moteur (5) du dispositif de soudage orbital (1),
**caractérisé en ce que**
le procédé comporte en outre :
- la mesure d'un couple appliqué par le moteur (6) sur le porte-électrode de soudage (4) au moyen d'un dispositif de mesure de couple électrique (7),
- l'arrêt automatique du moteur (6) lorsque le couple dépasse un premier couple prédéterminé.
